# EUROPÄISCHE PATENTSCHRIFT

(11) **EP 1 260 426 B1**
(45) Veröffentlichungstag und Bekanntmachung des Hinweises auf die Patenterteilung: **12.03.2008**
(21) Anmeldenummer: 02009005.6
(22) Anmeldetag: 23.04.2002
(51) Int. Cl.: B62D 25/08

(54) **Aufnahmevorrichtung für eine Gasfederanordnung mit schwenkbaren Anlenkhebeln in einer Aufbaustruktur eines Kraftfahrzeugs**
Container for a gas strut unit with pivoting links in a hollow body part of a motor vehicle
Réceptacle d'un dispositif avec bras basculants et amortisseurs pneumatiques logé dans une superstructure de carosserie automobile

(30) Priorität: 25.05.2001 DE 10125477
(43) Veröffentlichungstag der Anmeldung: 27.11.2002
(73) Patentinhaber: Dr.Ing. h.c. F. Porsche Aktiengesellschaft, 70435 Stuttgart (DE); Volkswagen AG, 38436 Wolfsburg (DE)
(72) Erfinder: Eberle, Wilfried, 89584 Ehingen (DE); Jahn, Rüdiger, 71229 Leonberg (DE); Polzer, Patrick, 75417 Mühlacker (DE); Hermann, Jochen, 38104 Braunschweig (DE); Reinelt, Holger, 31241 Ilsede (DE)

(56) Entgegenhaltungen:
- EP-A- 1 070 818
- DE-A- 2 744 927

## Beschreibung

Die Erfindung bezieht sich auf eine Aufnahmevorrichtung nach dem Oberbegriff des Patentanspruchs 1.

Aus der DE 27 44 927 A1 ist eine nach oben schwenkbare Heckklappe eines Kraftfahrzeugs mit beweglichen Scharnierhebeln und eine mit diesen verbundene Gasfeder bekannt. Die Gasfeder ist in einem vom äußeren Dachrahmen und einer Hecksäule und dem Dach geschaffenen Hohlraum in einer Aufnahme angeordnet, wobei an einem heckseitigen mit dem Dach und der Aufnahme verbundenen Flansch ein Scharnierhebel lösbar befestigt ist. Aus der gattungsbildenden EP 1 070 818 A2 ist eine Schwenklagerung für eine hochschwenkbare Klappe eines Fahrzeugaufbaus in einem Behältnis des Dachlängsträgers bekannt, wobei eine Gasfeder in diesem Behältnis abgestützt und gelagert ist und mittels eines herausgeführten Scharniers mit einer Kraftfahrzeug-Hecktür verbindbar ist.

Aufgabe der Erfindung ist es, eine verbesserte Aufnahmevorrichtung in einer Aufbaustruktur eines Kraftfahrzeugs für eine mit schwenkbaren Anlenkhebeln verbundene Gasfederanordnung zu schaffen, die einfach zu montieren und als Einheit in die Aufbaustruktur des Fahrzeugs einsetzbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß die Aufnahmevorrichtung in einer Aufbaustruktur des Fahrzeugs als vormontierte Baueinheit, bestehend beispielsweise aus dem Behältnis mit abschließendem Abschlußknotenblech als Deckel und montierten Gasfedern im Behältnis bestehen, wobei die Gasfedern sowie die mit diesen verbundenen Anlenkhebel in einem in der Aufbaustruktur des Fahrzeugs eingebetteten Behältnis angeordnet sind. Ein Lagergestell für die Lager ist nach der Erfindung mit einem ortsfesten Abstützrahmen im Behältnis verbunden. Dieses Behältnis wird obenseitig von einem der Aufbaustruktur in der Form angepaßten Abschlußknotenblech verschlossen, das mit der Aufbaustruktur fest verbindbar ist.

Damit eine exakte Lagerung der Gasfedern und der Anlenkhebel im Behältnis erfolgen kann, ist vorgesehen, daß der Abstützrahmen zwischen Seitenwänden des Behältnisses stirnseitig angeordnet ist und diesem Rahmen das Lagergestell mit abgekröpften Befestigungsschenkeln von außen vorgesetzt wird und zwischen dem Lagergestell und dem Abstützrahmen eine Wand des Abschlußdeckels oder eines Trägers angeordnet ist, die von Befestigungsschrauben durchsetzt ist, welche am Abstützrahmen über Muttern befestigbar sind.

Zum Durchstecken und zur Montage der Anlenkhebel für die Heckklappe im Behältnis und zum Verbinden mit den Gasfedern, weist der Abstützrahmen eine Durchstecköffnung für die Anlenkhebel auf, in welcher teilweise eine Lagerbrücke des Lagergestells angeordnet ist, welche die Schwenklager für die Anlenkhebel der Gasfedern aufnimmt. Die Lagerbrücke weist an freien Enden abgekröpfte Befestigungsschenkel auf, welche vor dem Abstützrahmen angeordnet und außenseitig an einer Wand des Abschlußknotenblechs anliegend sind, wobei sich die Lagerbrücke mit den Schwenklagern innenseitig des Abstützrahmens in Querrichtung zwischen den Seitenwänden des Behältnisses erstreckt.

Zur stabilen Anordnung des Lagergestells am Behältnis in der Aufbaustruktur ist das Behältnis vorderseitig vom Stützrahmen abgeschlossen, der an den Seitenwänden und am Boden des Behältnisses anliegend und mit den Wänden und dem Boden fest verbunden wird. Desweiteren ist vorgesehen, daß das Behältnis einem von den Seitenwänden abgestellten Schenkel aufweist, der mit der Aufbaustruktur bzw. dem Abschlußknotenblech verbindbar ist.

Im Boden des Behältnisses und in einer korrespondierenden Wand der Aufbaustruktur bzw. eines Trägers ist jeweils eine Montageöffnung für die Gasfedern vorgesehen, wobei diese Öffnung von einem Deckel abschließbar ist.

Zum Ablauf von sich ansammelndem Wasser im Behältnis ist im Boden eine Wasserablaufrinne vorgesehen, die beispielsweise aus einer Ausprägung im Boden besteht und die in einen Kanal der Aufbaustruktur einmündet. Diese Wasserablaufrinne verläuft vorzugsweise unterhalb des Stützrahmens so daß eine Durchgängigkeit vom Inneren des Behältnisses nach außen gewährleistet ist.

Ein Ausführungsbeispiel der Erfindung ist in den Zeichnungen dargestellt und wird im folgenden näher beschrieben.

Es zeigen:

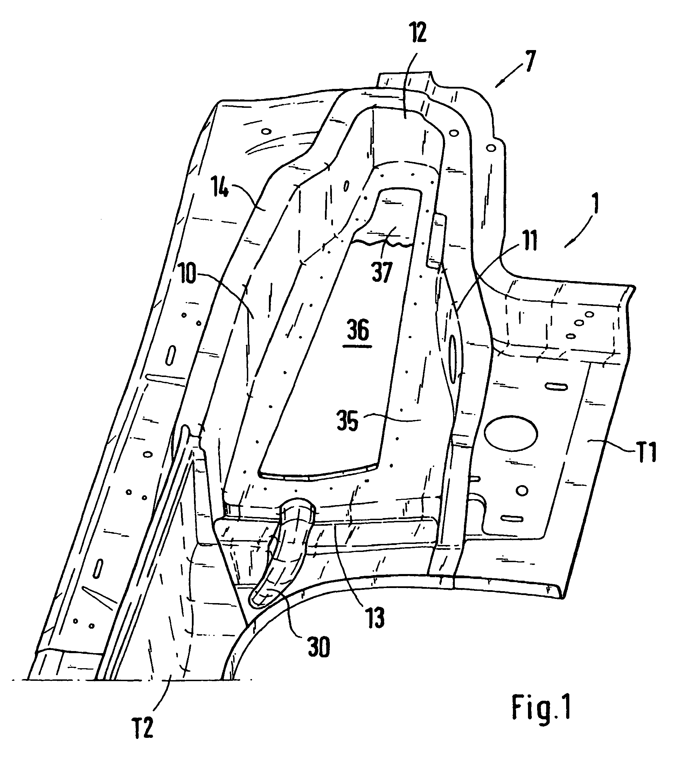

- Fig. 1: eine schaubildliche Darstellung eines Behältnisses der Aufnahmevorrichtung in einer Aufbaustruktur eines Kraftfahrzeugs,

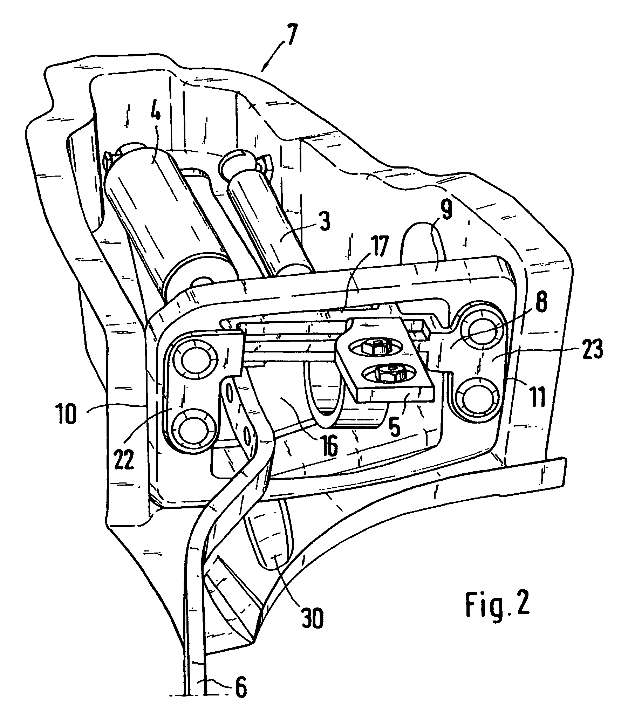

- Fig. 2: eine schaubildliche Ansicht auf eine Aufnahmevorrichtung mit Behältnis und innenliegenden Gasfedern, Anlenkhebeln sowie einem Lagergestell und einem Abstützrahmen,

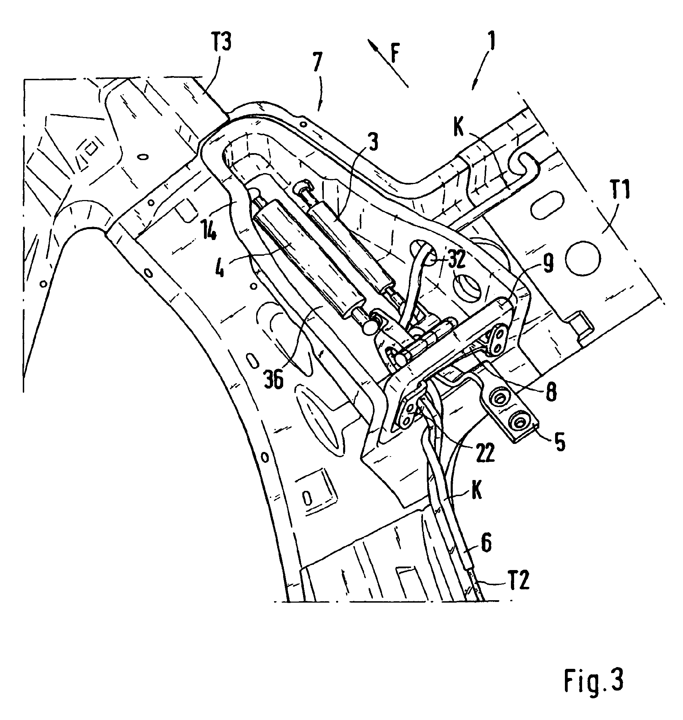

- Fig. 3: eine schaubildliche Darstellung der Aufnahmevorrichtung von oben her und in Fahrtrichtung F des Fahrzeugs gesehen,

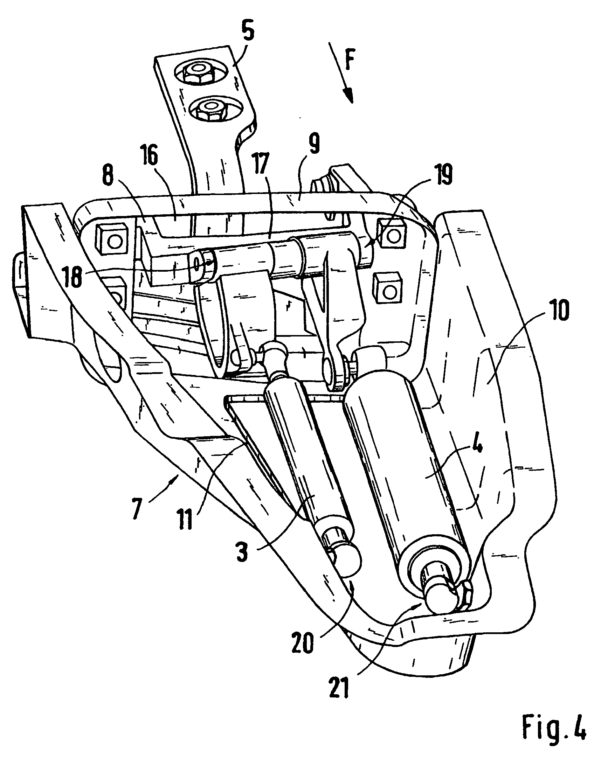

- Fig. 4: eine schaubildliche Darstellung der Aufnahmevorrichtung von hinten her und entgegen der Fahrtrichtung F des Fahrzeugs gesehen und

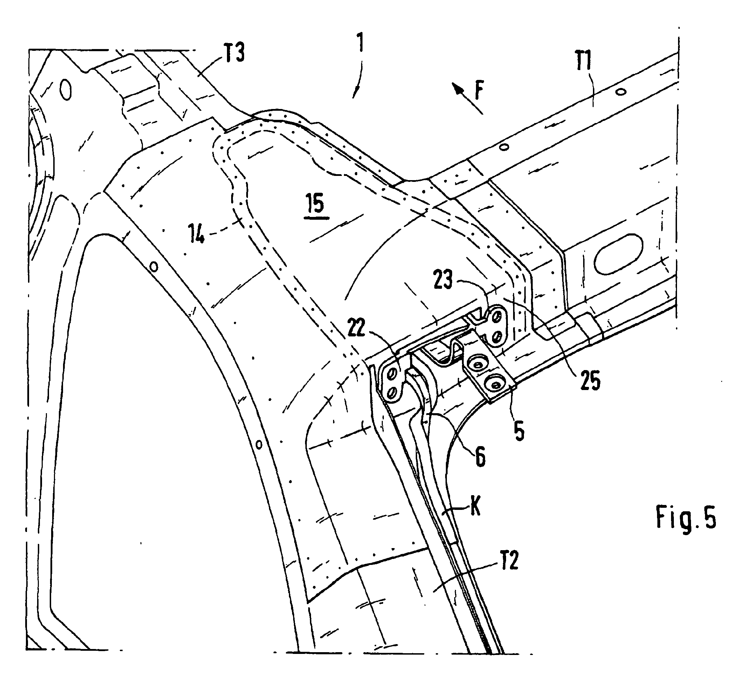

- Fig. 5: eine Ansicht auf die Aufbaustruktur mit geschlossenem Behältnis in Fahrtrichtung F gesehen.

Die Aufnahmevorrichtung 1 umfaßt ein in eine mehrere Träger T1, T2, T3 umfassende Aufbaustruktur 2 eingebettetes Behältnis 7, in dem Gasfedern 3, 4 angeordnet und mit Anlenkhebeln 5, 6 verbunden sind. Diese werden in Lagern 17, 18 eines Lagergestells 8 gehalten, das wiederum mit einem Abstützrahmen 9 an einem Träger oder einem Abschlußknotenblech 15 verbindbar ist, welches an der Aufbaustruktur 1 gehalten wird.

Das Behältnis 7 besteht im wesentlichen aus einer länglichen Wanne, die seitlich umflaufende Wände 10, 11 und eine rückseitige Stirnwand 12 aufweist, sowie eine vorderseitige Öffnung 13 zur Aufnahme des Abstützrahmens 9 besitzt. Die umlaufenden Wandungen weisen vorzugsweise eine durchgehende Abstellung 14 zur Befestigung eines abschließenden Knotenbleches 15 als Deckel auf.

Im Boden 35 des Behältnisses 7 ist eine Montageöffnung 36 vorgesehen und dementsprechend ist eine korrespondierende Öffnung im Träger T1 eingelassen. Diese Öffnungen sind durch einen Deckel 37 abschließbar.

Der Abstützrahmen 8 ist querliegend angeordnet und mit den Seitenwänden 10, 11 sowie mit dem Boden 15 fest verbunden und schließt die Stirnseite des Behältnisses 7 ab. Der Abstützrahmen 8 weist desweiteren eine Durchstecköffnung 16 auf, durch welche die Anlenkhebel 5, 6 zu den Gasfedern 3, 4 geführt sind. Diese Anlenkhebel 5, 6 sind an einer Lagerbrücke 17 des Lagergestells 8 in den Schwenklager 18, 19 gehalten. Mit den Hebeln 5, 6 sind desweiteren die Gasfedern 3, 4 verbunden, die mit ihren abgekehrten Enden 20, 21 in den Seitenwänden 10, 11 gelagert sind. Zur Verstärkung dieser Lagerbereiche für die Gasfedern 3, 4 ist ein Versteifungsteil bzw. ein Versteifungsblech mit den Wänden 10, 11 verbunden.

Das Lagergestell 8 weist abgekröpfte Befestigungsschenkel 22, 23 auf, die sich nach außen durch die Öffnung 16 des Abstützrahmens 8 erstrecken, wobei die Lagerbrücke 17 auf der anderen Seite mit dem Abstützrahmen 8 im Inneren des Behältnisses 7 liegt.

Im Boden 35 des Behältnisses 7 ist an der offenen Stirnseite eine Wasserablaufrinne 30 vorgesehen, die sich unterhalb des Abstützrahmens 9 hindurch erstreckt und das Wasser aus dem Behältnis 7 nach außen in einen Ablauf der Karosserie leitet. Die Wasserablaufrinne 30 ist im Boden 35 als Einrückung ausgestaltet.

In den Wänden 10, 11 des Behältnisses 7 sind Öffnungen 32 zur Durchführung von elektrischen Kabeln vorgesehen.

Zum Befestigen des Behältnisses 7 mit der Aufbaustruktur 1 bzw. mit den Trägern T1, T2, T3 liegt der Abstützrahmen 9 an einer Innenseite einer Stirnwand 25 des Abschlußknotenblechs 15 an. Von außen her wird die Stirnwand 25 von den Befestigungsschenkeln 22, 23 des Lagergestells 8 übergriffen. Mittels Schrauben, die in am Abstützrahmen 9 befestigten Muttern einschraubbar und festsetzbar sind, erfolgt eine Verbindung mit der Aufbaustruktur 1. Nachfolgend wird das Abschlußknotenblech 15 mit den Trägern T1, T2, T3 durch Punktschweißung befestigt. Der Boden 35 des Behältnisses 7 wird ebenfalls mit der Aufbaustruktur 1 bzw. den entsprechenden Trägern durch Punktschweißungen verbunden.

## Patentansprüche

1. Aufnahmevorrichtung für eine Gasfederanordnung mit schwenkbaren Anlenkhebel (5, 6) in einer Aufbaustruktur (1) eines Kraftfahrzeugs zum Verschwenken einer Heckklappe sowie einem Fensterteil der Heckklappe wobei Gasfedern (3, 4) in einer Aufnahme der Aufbaustruktur (1) angeordnet sind und die Gasfedern (3, 4) mit den verbundenen Anlenkhebeln (5, 6) in einem in der Aufbaustruktur (1) des Fahrzeugs eingebetteten Behältnis (7) angeordnet und in Lagern (18, 19) schwenkbar gehalten sind, das Behältnis (7) von einem Abschlussknotenblech (15) abgedeckt ist, und ein Lagergestell (8) für die Lager (18, 19), mit einem ortsfesten Abstützrahmen (9) im Behältnis (7) verbunden ist, **dadurch gekennzeichnet, dass** der Abstützrahmen zwischen Seitenwandungen (10, 11) des Behältnisses (7) stirnseitig angeordnet ist und diesem Abstützrahmen (9) das Lagergestell (8) mit abgekröpften Befestigungsschenkeln (22, 23) von außen vorgesetzt ist, wobei der Abstützrahmen (9) eine Durchstecköffnung (16) für die Anlenkhebel (5, 6) aufweist, in welcher teilweise eine Lagerbrücke (17) des Lagergestells (8) angeordnet ist, welche die Schwenklager (18, 19) der Anlenkhebel (5, 6) aufnimmt und dass zwischen dem Lagergestell (8) und dem Abstützrahmen (9) eine Wand (25) des Abschlussknotenblechs (15) angeordnet ist, die von Befestigungsschrauben durchsetzt ist, welche am Abstützrahmen (9) in Muttern befestigbar sind.

2. Aufnahmevorrichtung nach Anspruch 1, **dadurch gekennzeichnet, dass** die Lagerbrücke (17) an freien Enden die abgekröpften Befestigungsschenkel (22, 23) aufweist, welche vor dem Abstützrahmen (9) angeordnet und außenseitig an der Wand (25) des Abschlussknotenblechs (15) anliegend sind, wobei sich die Lagerbrücke (17) mit den Schwenklagern (18, 19) etwa innenseitig des Abstützrahmens (9) in Querrichtung zwischen den Seitenwänden (10, 11) des Behältnisses (7) erstreckt.

3. Aufnahmevorrichtung nach den Ansprüchen 1 oder 2, **dadurch gekennzeichnet, dass** die Gasfedern (3, 4) mit ihren den Anlenkhebeln (5, 6) abgekehrten Enden an den Seitenwänden (10, 11) des Behältnisses (7) gelagert sind und sich freiliegend zu den Schwenklagern (18, 19) an der Lagerbrücke (17) erstrecken.

4. Aufnahmevorrichtung nach einem oder mehreren der vorhergehenden Ansprüche, **dadurch gekennzeichnet, dass** das Behältnis (7) vorderseitig vom Stützrahmen (9) etwa bündig abgeschlossen ist, der an den Seitenwänden (10, 11) und am Boden (35) anliegend und mit diesen Wänden und dem Boden fest verbunden ist.

5. Aufnahmevorrichtung nach einem oder mehreren der vorhergehenden Ansprüche, **dadurch gekennzeichnet, dass** das Behältnis (7) von den Seitenwänden (10, 11) des Behältnisses (7) einen umlaufenden abgestellten Schenkel (14) aufweist, der mit mindestens einer Wand der Aufbaustruktur (1) oder einem Abschlussknotenblech (15) verbindbar ist.

6. Aufnahmevorrichtung nach einem oder mehreren der vorhergehenden Ansprüche, **dadurch gekennzeichnet, dass** im Boden (35) des Behältnisses (7) und in einer gegenüberliegenden korrespondierenden Wand der Aufbaustruktur (1) jeweils eine Montageöffnung (36) für die Gasfedern (3, 4) vorgesehen ist, die von einem Deckel (37) abschließbar ist.

7. Aufnahmevorrichtung nach einem oder mehreren der vorhergehenden Ansprüche, **dadurch gekennzeichnet, dass** unterhalb des Stützrahmens (9) im Boden (35) des Behältnisses (7) eine nach außen ausgeprägte Wasserablaufrinne (30) vorgesehen ist, die in einem Kanal der Aufbaustruktur (1) einmündet.

8. Aufnahmevorrichtung nach einem oder mehreren der vorhergehenden Ansprüche, **dadurch gekennzeichnet, dass** das Behältnis (7) mit dem Stützrahmen (9) und dem angepassten Abschlussknotenblech (15) verbunden ist und als solche Baueinheit in die Aufbaustruktur (1) bzw. in Träger (T1, T2, T3) einsetzbar und mit diesen verbindbar ist.

9. Aufnahmevorrichtung nach einem oder mehreren der vorhergehenden Ansprüche, **dadurch gekennzeichnet, dass** in den Wänden (10, 11) des Behältnisses (7) Öffnungen (32) zum Durchstecken von elektrischen Kabeln (K) vorgesehen sind.

## Claims

1. Holding device for a gas spring arrangement with pivotable articulation levers (5, 6) in a body structure (1) of a motor vehicle for pivoting a rear flap and a window part of the rear flap, with gas springs (3, 4) being arranged in a receptacle of the body structure (1) and the gas springs (3, 4) with the connected articulation levers (5, 6) being arranged in a container (7) which is embedded in the body structure of the vehicle and being pivotably held in bearings (18, 19), the container (7) being covered by a closure gusset plate (15) and a bearing frame (8) for the bearings (18, 19) being connected to a positionally fixed support frame (9) in the container (7), **characterized in that** the support frame is arranged at the end side between side walls (10, 11) of the container (7) and the bearing frame (8) is placed with bent-over fastening limbs (22, 23) on the front of said support frame (9) from the outside, with the support frame (9) having a passage opening (16) for the articulation levers (5, 6), in which passage opening (16) is partially arranged a bearing bridge (17) of the bearing frame (8), which bearing bridge (17) holds the pivot bearings (18, 19) of the articulation levers (5, 6), and **in that** a wall (25) of the closure gusset plate (15) is arranged between the bearing frame (8) and the support frame (9), which wall (25) is penetrated by fastening screws which can be fastened to the support frame (9) in nuts.

2. Holding device according to Claim 1, **characterized in that** the bearing bridge (17) has, at free ends, the bent-over fastening limbs (22, 23) which are arranged in front of the support frame (9) and bear at the outside against the wall (25) of the closure gusset plate (15), with the bearing bridge (17) with the pivot bearings (18, 19) extending approximately at the inside of the support frame (9) in the transverse direction between the side walls (10, 11) of the container (7).

3. Holding device according to Claims 1 or 2, **characterized in that** the gas springs (3, 4) are mounted, with their ends remote from the articulation levers (5, 6), on the side walls (10, 11) of the container (7) and extend freely to the pivot bearings (18, 19) on the bearing bridge (17).

4. Holding device according to one or more of the preceding claims, **characterized in that** the container (7) is closed off at the front side in a virtually flush manner by the support frame (9) which bears against the side walls (10, 11) and the base (35) and is fixedly connected to said walls and to the base.

5. Holding device according to one or more of the preceding claims, **characterized in that** the container (7) has, from the side walls (10, 11) of the container (7), an encircling turned-over limb (14) which can be connected to at least one wall of the body structure (1) or to a closure gusset plate (15).

6. Holding device according to one or more of the preceding claims, **characterized in that** in each case one assembly opening (36) for the gas springs (3, 4) is provided in the base (35) of the container (7) and in an opposite corresponding wall of the body structure (1), which assembly opening (36) can be closed off by a cover (37).

7. Holding device according to one or more of the preceding claims, **characterized in that** an outwardly embossed water run-off groove (30) is provided below the support frame (9) in the base (35) of the container (7), which water run-off groove (30) opens out in a duct of the body structure (1).

8. Holding device according to one or more of the preceding claims, **characterized in that** the container (7) is connected to the support frame (9) and to the adapted closure gusset plate (15) and can, as such a structural unit, be inserted into and connected to the body structure (1) or beams (T1, T2, T3).

9. Holding device according to one or more of the preceding claims, **characterized in that** openings (32) for passing through electrical cables (K) are provided in the walls (10, 11) of the container (7).

## Revendications

1. Réceptacle pour un système d'amortisseurs pneumatiques avec des bras articulés basculants (5, 6) logé dans une superstructure (1) d'un véhicule automobile pour faire pivoter un hayon ainsi qu'une partie de fenêtre du hayon, dans lequel des amortisseurs pneumatiques (3, 4) sont disposés dans un logement de la superstructure (1) et les amortisseurs pneumatiques (3, 4) sont disposés avec les bras articulés (5, 6) qui y sont reliés dans un boîtier (7) logé dans la superstructure (1) du véhicule et peuvent pivoter dans des paliers (18, 19), le boîtier (7) est recouvert par un gousset de fermeture (15), et un support (8) pour les paliers (18, 19) est assemblé à un cadre d'appui fixe (9) dans le boîtier (7), **caractérisé en ce que** le cadre d'appui est disposé frontalement entre des parois latérales (10, 11) du boîtier (7) et le support (8) est placé par l'extérieur devant ce cadre d'appui (9) avec des branches de fixation coudées (22, 23), dans lequel le cadre d'appui (9) présente une ouverture de passage (16) pour les bras articulés (5, 6), dans laquelle est disposé partiellement un pont d'appui (17) du support (8), qui comprend les paliers de pivotement (18, 19) des bras articulés (5, 6), et **en ce qu'**une paroi (25) du gousset de fermeture (15) est disposée entre le support (8) et le cadre d'appui (9) et est traversée par des vis de fixation, qui peuvent être fixées dans des écrous sur le cadre d'appui (9).

2. Réceptacle selon la revendication 1, **caractérisé en ce que** le pont d'appui (17) présente aux extrémités libres les branches de fixation coudées (22, 23), qui sont disposées devant le cadre d'appui (9) et qui sont appliquées extérieurement sur la paroi (25) du gousset de fermeture (15), dans lequel le pont d'appui (17) avec les paliers de pivotement (18, 19) s'étend environ du côté intérieur du cadre d'appui (9) en direction transversale entre les parois latérales (10, 11) du boîtier (7).

3. Réceptacle selon la revendication 1 ou 2, **caractérisé en ce que** les amortisseurs pneumatiques (3, 4) sont montés par leurs extrémités opposées aux bras articulés (5, 6) sur les parois latérales (10, 11) du boîtier (7) et s'étendent à découvert jusqu'aux paliers de pivotement (18, 19) sur le pont d'appui (17).

4. Réceptacle selon une ou plusieurs des revendications précédentes, **caractérisé en ce que** le boîtier (7) est fermé vers l'avant sensiblement à fleur par le cadre d'appui (9), qui est appliqué sur les parois latérales (10, 11) et sur le fond (35) et qui est solidaire de ces parois et du fond.

5. Réceptacle selon une ou plusieurs des revendications précédentes, **caractérisé en ce que** le boîtier (7) comporte une bride périphérique (14) s'écartant des parois latérales (10, 11) du boîtier (7), qui peut être assemblée à au moins une paroi de la superstructure (1) ou à un gousset de fermeture (15).

6. Réceptacle selon une ou plusieurs des revendications précédentes, **caractérisé en ce qu'**il est prévu dans le fond (35) du boîtier (7) et dans une paroi opposée correspondante de la superstructure (1) chaque fois une ouverture de montage (36) pour les amortisseurs pneumatiques (3, 4), qui peut être fermée par un couvercle (37).

7. Réceptacle selon une ou plusieurs des revendications précédentes, **caractérisé en ce qu'**il est prévu en dessous du cadre d'appui (9), dans le fond (35) du boîtier (7), un chenal d'évacuation de l'eau (30) embouti vers l'extérieur, qui débouche dans un canal de la superstructure (1).

8. Réceptacle selon une ou plusieurs des revendications précédentes, **caractérisé en ce que** le boîtier (7) est assemblé au cadre d'appui (9) et au gousset de fermeture adapté (15) et peut être inséré sous forme d'unité de construction dans la superstructure (1) ou dans des poutres (T1, T2, T3) et assemblé à celles-ci.

9. Réceptacle selon une ou plusieurs des revendications précédentes, **caractérisé en ce qu'**il est prévu dans les parois (10, 11) du boîtier (7) des ouvertures (32) pour le passage de câbles électriques (K).
